# EUROPEAN PATENT SPECIFICATION

(11) **EP 2 136 483 B1**
(45) Date of publication and mention of the grant of the patent: **15.06.2011**
(21) Application number: 08800970.9
(22) Date of filing: 24.09.2008
(51) Int. Cl.: H04B 7/26, H04W 4/00, H04W 8/12, H04W 48/12, H04W 72/12

(54) **A METHOD, SYSTEM AND DEVICE OF MAPPING SYSTEM INFORMATION BLOCK**
VERFAHREN, SYSTEM UND VORRICHTUNG ZUM MAPPING EINES BLOCKS VON SYSTEMINFORMATIONEN
PROCÉDÉ, SYSTÈME ET DISPOSITIF DE MAPPAGE DE BLOC D'INFORMATIONS SYSTÈME

(30) Priority: 30.09.2007 CN 200710162770
(43) Date of publication of application: 23.12.2009
(73) Proprietor: Huawei Technologies Co., Ltd., Longgang District, Shenzhen Guangdong 518129 (CN)
(72) Inventor: MA, Xiaofei, Longgang District 518129, Shenzhen, P.R. (CN); HUANG, Yinghua, Longgang District 518129, Shenzhen, P.R. (CN); XIE, Boyun, Longgang District 518129, Shenzhen, P.R. (CN); YU, Yinghui, Longgang District 518129, Shenzhen, P.R. (CN); XIE, Mingjiang, Longgang District 518129, Shenzhen, P.R. (CN); ZHU, Zuoyan, Longgang District 518129, Shenzhen, P.R. (CN); CHEN, Jun, Longgang District 518129, Shenzhen, P.R. (CN)
(74) Representative: Kreuz, Georg Maria
(86) International application number: PCT/CN2008/072493
(87) International publication number: WO 2009/046663

(56) References cited:
- EP-A1- 1 799 003
- CN-A- 101 001 459
- "3rd Generation Partnership Project;Technical Specification Group Radio Access Network;Evolved Universal Terrestrial Radio Access (E-UTRA)Radio Resource Control (RRC);Protocol Specification(Release 8)" 3GPP DRAFT; R2-073717 E-UTRA RRC SPECIFICATION-V020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070827, 27 August 2007 (2007-08-27), XP050136390 [retrieved on 2007-08-27]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)" 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 June 2007 (2007-06-01), pages 1-106, XP050377576
- ERICSSON: '3GPP TSG RAN WG2 LTE RRC Ad-hoc 13th-14th December 2007, Vienna, Austria [R2-075558]', 13 December 2007 article 'Concatenation of Scheduling Units and SIB mapping', XP008120835
- HUAWEI: 'discussion of the mapping between SIBs and SUs in LTE system information' 3GPP TSG WG2 AD HOC LTE RRC 13TH-14TH DECEMBER 2007, VIENNA, AUSTRIA 13 December 2007, XP050142108

## Description

### Field of the Invention

The present invention relates to communication technologies, and in particular, to a method, system, and apparatus for mapping a System Information Block (SIB).

### Background of the Invention

In a cellular system, system information indicates the public information of one or more cells. The system information in a wideband code division multiple access (WCDMA) system includes the following information: a non access stratum (NAS) system message, user equipment (UE)-related timers and counters, network-related identifiers, cell selection and cell reselection parameters, physical downlink control channel (PDCCH) parameters, measurement control information, neighbor cell list information, auxiliary UE location information, and other information parameters related to cells and networks.

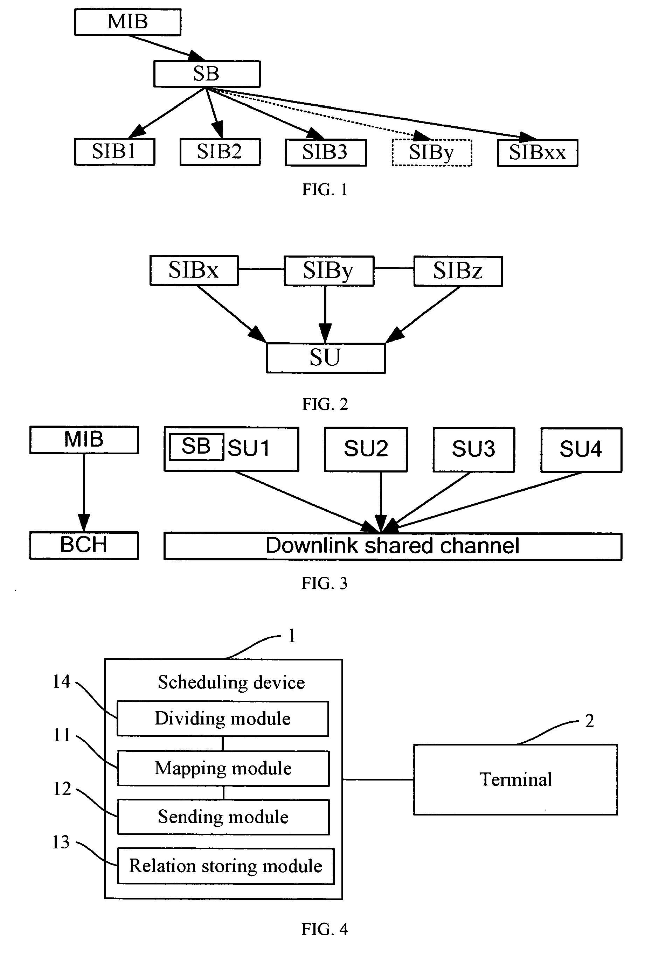

As the system information includes too much content information, it may be divided into SIBs by feature. Each SIB includes the system information of the same feature. For example, SIB 1 mainly includes timer and counter parameter information of an UE in idle mode. In a universal mobile telecommunications system (UMTS), system information is usually in a tree structure. As shown in FIG. 1, the root node is a master information block (MIB). The MIB includes one or two scheduling blocks (SBs) and each SB includes the scheduling information related to multiple SIBs. The UE receives the information in the MIB at a fixed position, analyzes the information, reads an SB according to the information in the MIB, and then determines the time of reading corresponding SIB information according to the scheduling information in the SB. Each SIB is repeatedly transmitted on a broadcast channel (BCH). Thus, the UE may read SIB information according to the scheduling information in the SB and does not need to repeatedly read SIB information.

In a long term evolution (LTE) system, the mapping structure of system information is adjusted. That is, SIBs of the same feature are centralized to form a scheduling unit (SU). The same feature mainly indicates that the information repetition period is the same. As shown in FIGS 2, three to four SUs are finally formed in the LTE system. During system information mapping, the system maps SIBs to SBs, centralizes multiple SBs of the same feature to form an SU, stores the mapping relations among the SIBs, SBs, and SUs to an MIB, and maps the MIB to a BCH, as shown in FIG 3. It should be noted that one SB may include multiple SIBs. In FIG 3, the SB is mapped to SU 1, and then SU 1 and other SUs are mapped to a downlink shared channel. In this way, the UE may acquire mapping relations among the SIBs, SBs, and SUs by receiving and analyzing the information in the MIB. According to the mapping relations, the UE may know when and where to read an SU. After reading the SU, the UE may further read an SB and determine the time of reading the corresponding SIB information according to the scheduling information in the SB.

R2-073717 E-UTRAN RRC specification-V020 (2007-08-28) discloses that dynamic scheduling is used for the SUs other than SU-1 i.e. the UEs acquires the detailed time-domain scheduling (as well as other information e.g. frequency-domain scheduling, used transport format) of these scheduling units from the PDCCH.

3GPP TS 36.300 (2007-06-01) discloses that the mapping of SIBs on to SUs may be configurable or fixed in the specification (FFS).

In the prior art, the mapping between an SIB and an SU is not clearly defined and described. According to the common processing mode of the UMTS, the repetition periods of several SUs are fixed. Thus, the running efficiency of the system is low.

### Summary of the Invention

The present invention provides a method, system, and apparatus for mapping an SIB so that the SIB may be mapped to different SUs according to different application scenarios of the system. In this way, the system efficiency is improved.

As a first aspect of the present invention a method for mapping an SIB is provided. The method generally includes: dividing system information into SIBs; and dynamically mapping the SIBs to SUs, wherein the dynamically mapping the SIBs to SUs comprises: mapping the SIBs to SUs at different scheduling frequencies.

As a second aspect of the present invention a communication system is provided. The communication system generally includes: a scheduling apparatus, adapted to: divide system information into SIBs, dynamically map the SIBs to SUs, and send the SUs, wherein the dynamically mapping the SIBs to SUs comprises: mapping the SIBs to SUs at different scheduling frequencies; and a terminal, adapted to acquire the SUs sent from the scheduling apparatus.

As a third aspect of the present invention a scheduling apparatus is provided. The scheduling apparatus generally includes: a dividing module, adapted to divide system information into SIBs; and a mapping module, adapted to dynamically map the SIBs divided by the dividing module to SUs, wherein the dynamically mapping the SIBs to SUs comprises: mapping the SIBs to SUs at different scheduling frequencies.

In the present invention, SIBs may be dynamically mapped to the SUs at different scheduling frequencies according to different application scenarios of the system so that the system efficiency is improved, which is different from the prior art.

### Brief Description of the Drawings

FIG. 1 shows a structure of system information in a UMTS in the prior art;
FIG. 2 shows a structure of an SU in the prior art;
FIG. 3 is a schematic drawing of system information mapping in the prior art;
FIG. 4 shows a structure of a communication system according to an embodiment of the invention; and
FIG 5 is a flowchart of a method for mapping an SIB according to an embodiment of the present invention.

### Detailed Description of the Invention

Embodiments of the present invention provide a method, system, and apparatus for mapping an SIB. In the embodiments of the present invention, SIBs may be dynamically mapped to different SUs according to different application scenarios of the system to support different scheduling frequencies for SIBs, to flexibly adjust system information overhead and system performance, and to improve system efficiency.

As shown in FIG. 4, a communication system includes a scheduling apparatus 1 and a terminal 2. The scheduling apparatus 1 is adapted to: divide system information into SIBs, dynamically map the SIBs to different SUs according to different application scenarios, and send the SUs. In addition, the scheduling apparatus 1 stores the mapping relations between the SIBs and the SUs on the SU, on the SB, or on the MIB; or the scheduling apparatus 1 stores the mapping relations between the SIBs and the SUs on the reserved resource block of PDCCH which corresponds to the SU, SB, or MIB.

The terminal 2 is adapted to acquire the SUs sent from the scheduling apparatus 1.

The scheduling apparatus 1 may further includes a mapping module 11, a sending module 12, a relation storing module 13, and a dividing module 14.

The dividing module 14 is adapted to divide system information into SIBs.

The mapping module 11 is adapted to dynamically map the SIBs divided by the dividing module 14 to the SUs at different scheduling frequencies according to different application scenarios of the system. Different SUs may have different scheduling frequencies or the same scheduling frequency. For example, an SIB may be mapped to the SUs at different scheduling frequencies in different cells or in the same cell. In general, SU 1 has the shortest scheduling period and the highest scheduling frequency; SU 2 has a longer scheduling period but a lower scheduling frequency than SU 1; SU 3 has a longer scheduling period but a lower scheduling frequency than SU 2; ...; and SU n (n≥3) has a longer scheduling period but a lower scheduling frequency than SU n-1. Thus, for different cells, in a low bandwidth cell, an SIB may be mapped to a low frequency SU to prevent system information from occupying too much bandwidth. In a self-optimization network (SON), operators may control the mapping from an SIB to an SU to save resources. In remote mountainous areas or at midnight when few services are required, an SIB may be mapped to a low frequency SU to save resources for operators. In a cell with too heavy load, an SIB may be mapped to a low frequency SU to reserve more resources for data transmission so as to further improve the resource utilization and lessen cell load to a certain degree. In the case of too strong interference, an SIB may be mapped to a low frequency SU to decrease interference to a certain degree because the sending frequency of the SIB is lowered.

Under certain conditions, for example, when the load recovers to normal, the SIB may be mapped to a high frequency SU. Supposing the bandwidth of cell 1 is 1.25 MHz and that of cell 2 is 2.5 MHz and SIBx is mapped to SU 2 in cell 2, because SU 3 has a lower scheduling frequency than SU 2, SIBx may be mapped to SU 3 in cell 1. In this way, the probability that SIBx is repeatedly transmitted decreases and the bandwidth occupied by SIBx in cell 1 further decreases. When the system load is too heavy, SIBx may be mapped to SU 3 in cell 2. When the system load recovers to normal, SIBx may be remapped to SU 2 in cell 2.

The sending module 12 is adapted to send SUs mapped by the mapping module 11 according to the sending occasion of the SUs.

The relation storing module 13 is adapted to store the SIB-SU mapping relations obtained by the mapping module 11 to an SU, an SB, an MIB, or a PDCCH of the SB, SU, or MIB. The relation storing module 13 may store SIB-SU mapping relations to:
an SU, an SB, an MIB, or a PDCCH of the SU, SB, or MIB;
an SU and an SB, an SU and an MIB, an SB and an MIB, or an SU, an SB, and an MIB at the same time; or
PDCCHs of an SU and an SB, PDCCHs of an SU and an MIB, PDCCHs of an SB and an MIB, or PDCCHs of an SU, an SB, and an MIB. In this way, the terminal 2 may obtain the mapping relation between the SIB and the SU by reading the SIB-SU mapping field so as to read the SIB mapped to the SU.

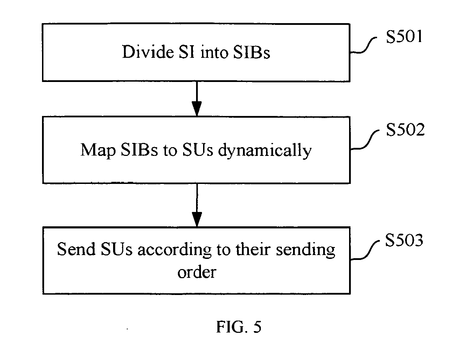

As shown in FIG. 5, a method for mapping an SIB includes the following steps:
S501. System information is divided into SIBs.
   The system information includes many contents and may be divided into multiple SIBs by feature. Each SIB may include the system information of the same feature.
S502. The SIBs are dynamically mapped to SUs.

In this embodiment, the SIBs are dynamically mapped to the SUs at different scheduling frequencies according to different application scenarios of the system. Different SUs may have different scheduling frequencies or the same scheduling frequency. For example, an SIB may be mapped to the SUs at different scheduling frequencies in different cells or in the same cell. In general, SU 1 has the shortest scheduling period and the highest scheduling frequency; SU 2 has a longer scheduling period but a lower scheduling frequency than SU 1; SU 3 has a longer scheduling period but a lower scheduling frequency than SU 2; ...; and SU n (n ≥ 3) has a longer scheduling period but a lower scheduling frequency than SU n-1. Thus, in a low bandwidth cell, an SIB may be mapped to a low frequency SU to prevent system information from occupying too much bandwidth. In an SON, operators may control the mapping from an SIB to an SU to save resources. In remote mountainous areas or at midnight when few services are required, an SIB may be mapped to a low frequency SU to save resources for operators. In a cell with too heavy load, an SIB may be mapped to a low frequency SU to reserve more resources for data transmission so as to further improve the resource utilization and lessen cell load to a certain degree. In the case of too strong interference, an SIB may be mapped to a low frequency SU to decrease interference to a certain degree because the sending frequency of the SIB is lowered.

Under certain conditions, for example, when the load recovers to normal, the SIB may be mapped to a high frequency SU. Supposing the bandwidth of cell 1 is 1.25 MHz and that of cell 2 is 2.5 MHz and SIBx is mapped to SU 2 in cell 2, because SU 3 has a lower scheduling frequency than SU 2, SIBx may be mapped to SU 3 in cell 1. The probability that SIBx is repeatedly transmitted decreases and the bandwidth occupied by SIBx in cell 1 further decreases. When the system load is too heavy, SIBx may be mapped to SU 3 in cell 2. When the system load recovers to normal, SIBx may be remapped to SU 2 in cell 2.

In different application scenarios of the system, after a mapping relation is dynamically established between an SIB and an SU, the method may further include the following step:
S503. The SU is sent according to its sending occasion.

In the embodiments of the present invention, a resource block is reserved on each SU, SB, MIB, or the PDCCH of the SU, SB, or MIB to store SIB-SU mapping relations. The SIB-SU mapping relations may be also stored to:
an SU and an SB, an SU and an MIB, an SB and an MIB, or an SU, an SB, and an MIB at the same time; or
PDCCHs of an SU, an SB, or an MIB, PDCCHs of an SU and an SB, PDCCHs of an SU and an MIB, PDCCHs of an SB and an MIB, or PDCCHs of an SU, an SB, and an MIB.

In this way, the terminal may obtain the mapping relation between the SIB and the SU by reading the SIB-SU mapping field so as to read the SIB mapped to the SU.

With the method for mapping SIBs, the SIBs are mapped to different SUs according to different application scenarios of the system and the terminal may obtain the SIB mapped to an SU by reading the mapping relation between the SIB and the SU in the SIB-SU mapping field. Thus different scheduling frequencies are supported for SIBs and the system efficiency is improved.

Through the preceding descriptions of embodiments of the present invention, those skilled in the art may understand that embodiments of the present invention may be implemented by hardware or by software in combination with a necessary hardware platform. Thus, the technical solution of the present invention may be made into software. The software may be stored in a non-volatile storage medium such as a compact disc-read only memory (CD-ROM), a USB disk, or a mobile hard disk, and include several instructions that instruct a computer apparatus such as a personal computer (PC), a server, or a network apparatus to execute the methods provided in each embodiment of the present invention.

Although the present invention has been described through several exemplary embodiments, the invention is not limited to such embodiments. It is apparent that those skilled in the art may make various modifications and variations to the invention without departing from the spirit and scope of the invention. The invention is intended to cover the modifications and variations provided that they fall in the scope of protection defined by the following claims or their equivalents.

## Claims

1. Method for Mapping System Information Block, SIB, **characterized by** comprising:
dividing (S501) system information into SIBs; and
dynamically mapping (S502) the SIBs to scheduling units, SUs, wherein the dynamically mapping the SIBs to SUs comprises: mapping the SIBs to SUs at different scheduling frequencies.

2. The method of claim 1, wherein the mapping the SIBs to SUs at different scheduling frequencies comprises:
mapping the SIBs to SUs at different scheduling frequencies according to different widths of cells; or
mapping the SIBs to SUs at different scheduling frequencies according to different scenarios of an SON, self-optimization network; or
mapping the SIBs to SUs at different scheduling frequencies according to different load of cells; or
mapping the SIBs to SUs at different scheduling frequencies according to different interference.

3. The method of any one of claims 1-2, wherein the relations between the SIBs and the Sus are stored to an SU.

4. The method of any one of claims 1-3, comprising: sending (S503) the SU according to the SU's sending occasion after the mapping the SIBs to SUs.

5. The method of claim 3, comprising: acquiring the SU after the sending the SU according to the SU's sending occasion.

6. The method of claim 1, comprising: storing mapping relations between the SIBs and the SUs to an SB, an MIB, or storing mapping relations between the SIBs and the SUs to a PDCCH corresponding to the SB, corresponding to the SU, or corresponding to the MIB.

7. A scheduling apparatus, comprising:
a dividing module (14), adapted to divide system information, into system information blocks, SIBs; and
a mapping module (11), adapted to dynamically map the SIBs divided by the dividing module to scheduling units, SUs, wherein the dynamically mapping the SIBs to SUs comprises: mapping the SIBs to SUs at different scheduling frequencies.

8. The apparatus of claim 7, further comprising:
a sending module (12), adapted to send the SUs mapped by the mapping module according to sending occasion of the SUs.

9. The apparatus of any one of claims 8-9, further comprising:
a relation storing module (13), adapted to store the SIB-SU mapping relations obtained by the mapping module to an SB, an MIB, or a PDCCH of the SB, the SU, or the MIB.

10. A communication system, **characterized by** comprising:
a scheduling apparatus (1), adapted to divide system information, into system information blocks, SIBs, dynamically map the SIBs to SUs, and send the SUs, wherein the dynamically mapping the SIBs to SUs comprises: mapping the SIBs to SUs at different scheduling frequencies; and
a terminal (2), adapted to acquire the SUs sent from the scheduling apparatus.

## Patentansprüche

1. Verfahren zum Abbilden eines Systeminformationsblocks SIB, **gekennzeichnet durch** die folgenden Schritte:
Aufteilen (S501) von Systeminformationen in SIB; und
dynamisches Abbilden (S502) der SIB auf Scheduling-Einheiten SU, wobei das dynamische Abbilden der SIB auf SU Folgendes umfasst: Abbilden der SIB auf SU mit verschiedenen Scheduling-Häufigkeiten.

2. Verfahren nach Anspruch 1, wobei das Abbilden der SIB auf SU mit verschiedenen Scheduling-Häufigkeiten Folgendes umfasst:
Abbilden der SIB auf SU mit verschiedenen Scheduling-Häufigkeiten gemäß verschiedenen Breiten von Zellen; oder
Abbilden der SIB auf SU mit verschiedenen Scheduling-Häufigkeiten gemäß verschiedenen Szenarien eines Selbstoptimierungsnetzes SON; oder
Abbilden der SIB auf SU mit verschiedenen Scheduling-Häufigkeiten gemäß verschiedener Last von Zellen; oder
Abbilden der SIB auf SU mit verschiedenen Scheduling-Häufigkeiten gemäß verschiedenen Störungen.

3. Verfahren nach einem der Ansprüche 1-2, wobei die Beziehungen zwischen den SIB und den SU in einer SU gespeichert werden.

4. Verfahren nach einem der Ansprüche 1-3, mit dem folgenden Schritt: Senden (S503) der SU gemäß der Sendegelegenheit der SU nach dem Abbilden der SIB auf SU.

5. Verfahren nach Anspruch 3, mit dem folgenden Schritt: Beschaffen der SU nach dem Senden der SU gemäß der Sendegelegenheit der SU.

6. Verfahren nach Anspruch 1, mit den folgenden Schritten: Speichern von Abbildungsbeziehungen zwischen den SIB und den SU in einem SB, einem MIB oder Speichern von Abbildungsbeziehungen zwischen den SIB und den SU in einem PDCCH, der dem SB entspricht, der SU entspricht oder dem MIB entspricht.

7. Scheduling-Vorrichtung, umfassend:
ein Aufteilungsmodul (14), das dafür ausgelegt ist, Systeminformationen in Systeminformationsblöcke SIB aufzuteilen; und
ein Abbildungsmodul (11), das dafür ausgelegt ist, die durch das Aufteilungsmodul aufgeteilten SIB dynamisch auf Scheduling-Einheiten SU abzubilden, wobei das dynamische Abbilden der SIB auf SU Folgendes umfasst: Abbilden der SIB auf SU mit verschiedenen Scheduling-Häufigkeiten.

8. Vorrichtung nach Anspruch 7, ferner umfassend:
ein Sendemodul (12), das dafür ausgelegt ist, die durch das Abbildungsmodul abgebildeten SU gemäß Sendegelegenheit der SU zu senden.

9. Vorrichtung nach einem der Ansprüche 8-9, ferner umfassend:
ein Beziehungsspeichermodul (13), das dafür ausgelegt ist, die durch das Abbildungsmodul erhaltenen SIB-SU-Abbildungsbeziehungen in einem SB, einem MIB oder einem PDCCH des SB, der SU oder des MIB zu speichern.

10. Kommunikationssystem, **dadurch gekennzeichnet, dass** es Folgendes umfasst:
eine Scheduling-Vorrichtung (1), die dafür ausgelegt ist, Systeminformationen in Systeminformationsblöcke SIB aufzuteilen, die SIB dynamisch auf SU abzubilden und die SU zu senden, wobei das dynamische Abbilden der SIB auf SU Folgendes umfasst: Abbilden der SIB auf SU mit verschiedenen Scheduling-Häufigkeiten; und
ein Endgerät (2), das dafür ausgelegt ist, die von der Scheduling-Vorrichtung gesendeten SU zu beschaffen.

## Revendications

1. Procédé de Mappage de Bloc d'Informations Système, SIB, **caractérisé en ce qu'**il comprend :
la division (S501) d'informations système en plusieurs SIB ; et
le mappage dynamique (S502) des SIB avec des unités d'ordonnancement, SU, le mappage dynamique des SIB avec les SU comprenant : le mappage des SIB avec les SU à différentes fréquences d'ordonnancement.

2. Procédé selon la revendication 1, dans lequel le mappage des SIB avec les SU à différentes fréquences d'ordonnancement comprend :
le mappage des SIB avec les SU à différentes fréquences d'ordonnancement en fonction de différentes largeurs de cellules ; ou
le mappage des SIB avec les SU à différentes fréquences d'ordonnancement en fonction de différents scénarios d'un réseau à auto-optimisation, SON ; ou
le mappage des SIB avec les SU à différentes fréquences d'ordonnancement en fonction de différentes charges de cellules ; ou
le mappage des SIB avec les SU à différentes fréquences d'ordonnancement en fonction de différentes interférences.

3. Procédé selon l'une quelconque des revendications 1-2, dans lequel les relations entre les SIB et les SU sont mémorisées dans une SU.

4. Procédé selon l'une quelconque des revendications 1-3, comprenant : l'envoi (S503) de la SU en fonction de l'occasion d'envoi de la SU après le mappage des SIB avec les SU.

5. Procédé selon la revendication 3, comprenant : l'acquisition de la SU après l'envoi de la SU en fonction de l'occasion d'envoi de la SU.

6. Procédé selon la revendication 1, comprenant : la mémorisation des relations de mappage entre les SIB et les SU dans un SB, un MIB, ou la mémorisation des relations de mappage entre les SIB et les SU dans un PDCCH correspondant au SB, correspondant à la SU, ou correspondant au MIB.

7. Appareil d'ordonnancement, comprenant :
un module de division (14), adapté pour diviser des informations système en blocs d'informations système, SIB ; et
un module de mappage (11), adapté pour mapper dynamiquement les SIB divisés par le module de division avec des unités d'ordonnancement, SU, le mappage dynamique des SIB avec les SU comprenant : le mappage des SIB avec les SU à différentes fréquences d'ordonnancement.

8. Appareil selon la revendication 7, comprenant en outre :
un module d'envoi (12), adapté pour envoyer les SU mappées par le module de mappage en fonction de l'occasion d'envoi des SU.

9. Appareil selon l'une quelconque des revendications 8-9, comprenant en outre :
un module de mémorisation de relations (13), adapté pour mémoriser les relations de mappage SIB-SU obtenues par le module de mappage dans un SB, un MIB, ou un PDCCH du SB, de la SU, ou du MIB.

10. Système de communication, **caractérisé en ce qu'**il comprend :
un appareil d'ordonnancement (1), adapté pour diviser des informations système en blocs d'informations système, SIB, mapper dynamiquement les SIB avec les SU, et
envoyer les SU, le mappage dynamique des SIB avec les SU comprenant : le mappage des SIB avec les SU à différentes fréquences d'ordonnancement ; et
un terminal (2), adapté pour acquérir les SU envoyées par l'appareil d'ordonnancement.
